# EUROPÄISCHE PATENTSCHRIFT

(11) **EP 1 796 986 B1**
(45) Veröffentlichungstag und Bekanntmachung des Hinweises auf die Patenterteilung: **26.11.2008**
(21) Anmeldenummer: 05793521.5
(22) Anmeldetag: 20.09.2005
(51) Int. Cl.: B65D 71/00, B65D 85/671, B65D 85/02, B65D 21/02

(54) **VERPACKUNG FÜR GROSSWÄLZLAGER**
PACKAGING FOR LARGE ANTI-FRICTION BEARINGS
CONDITIONNEMENT POUR DE GRANDS PALIERS A ROULEMENT

(30) Priorität: 05.10.2004 DE 102004048286
(43) Veröffentlichungstag der Anmeldung: 20.06.2007
(73) Patentinhaber: Schaeffler KG, 91074 Herzogenaurach (DE); FAG Kugelfischer AG & Co. oHG, 97419 Schweinfurt (DE)
(72) Erfinder: HASSDENTEUFEL, Martin, 91325 Adelsdorf (DE); HEINRICH, Steffen, 91056 Erlangen (DE); KITTEL, Michael, 97422 Schweinfurt (DE)
(86) Internationale Anmeldenummer: PCT/EP2005/010096
(87) Internationale Veröffentlichungsnummer: WO 2006/037457

(56) Entgegenhaltungen:
- US-A- 3 318 443
- US-A- 5 450 961

## Beschreibung

Die Erfindung betrifft eine Verpackung für den Versand und die Handhabung von Großwälzlagern, bestehend aus einem Unterteil und einem Oberteil, die ineinander stülpbar sind und zwischen sich einen Raum zur Aufnahme wenigstens eines Großwälzlagers begrenzen. Im Sinne der Erfindung ist dabei der Begriff Großwälzlager so auszulegen, dass darunter auch dessen Lagerbestandteile, wie beispielsweise ein Lagerinnen- oder ein Lageraußenring, fallen. Aber auch für völlig andersartige rotationssymmetrische Teile erscheint die Erfindung anwendbar.

### Hintergrund der Erfindung

Der Fachmann versteht unter Großwälzlagern Lagereinheiten, deren Durchmesser sich etwa im Bereich zwischen 360 und 610 mm bewegen. Bedingt durch diese großen Abmessungen ergeben sich Lagergewichte von 30 kg und mehr. Es liegt auf der Hand, dass derartige Großwälzlager für den Transport entsprechend verpackt werden müssen, um sie sicher handhaben zu können.

In diesem Zusammenhang ist es allgemein bekannt, dass solche Lager in Kisten aus Holz verpackt werden, wobei das Wälzlager vor dem Einsetzen in die Kiste entweder mit Kunststoffband umwickelt oder mit Hilfe von Beuteln und Wellpappe geschützt wird. Diese Verpackungsart erfordert jedoch eine aufwendige Packmittelvorbereitung und ist daher teuer. Beispielsweise ist der Wickelprozess sehr zeitaufwendig. Darüber hinaus sind die Holzkisten den jeweiligen Außenmaßen des Großwälzlagers anzupassen und es ist entsprechend viel Polstermaterial zu verwenden, das wiederum entsorgt werden muß.

Aus den deutschen Geschmacksmusteranmeldungen Nr. 401 07 626, 401 07 641, 401 07 642, 402 03 397 sind Lagerbehältnisse für Lager und dessen Teile bekannt geworden, die aus einem Unterteil und einem Oberteil bestehen. Beide Teile sind ineinander stülpbar und begrenzen zwischen sich einen Raum zur Aufnahme des Großwälzlagers.

Nachteilig dabei ist, dass derartige Lagerbehältnisse immer auf die verwendete Lagergröße abzustimmen sind. Dies erfolgt derart, dass im Lagerbehältnis Einsätze vorhanden sind, die das Lager aufnehmen. Diese Einsätze sind den jeweiligen Lagergrößen anzupassen. Der Lagerhersteller muß demnach eine Vielzahl von unterschiedlich dimensionierten Einsätzen bereitstellen, was die gesamte Verpackung wiederum kostenmäßig in unnötiger Weise belastet.

### Zusammenfassung der Erfindung

Ausgehend von den bekannten Nachteilen des Standes der Technik liegt der Erfindung daher die Aufgabe zugrunde, eine Verpackung für Großwälzlager bereitzustellen, die universell anwendbar ist.

Erfindungsgemäß wird diese Aufgabe nach dem kennzeichnenden Teil von Anspruch 1 in Verbindung mit dessen Oberbegriff dadurch gelöst, dass eine äußere Mantelfläche des Großwälzlagers an mehreren voneinander beabstandeten Umfangsstellen von einem feststellbaren Halteelement umgriffen ist, wobei das mit dem Unterteil lösbar verbundene Halteelement in seiner Stellung derart veränderbar ist, dass sein Abstand bezogen auf einen Mittelpunkt der Verpackung vergrößer- oder verkleinerbar ist.

Der Vorteil der erfindungsgemäßen Lösung liegt darin, dass von der gleichen Verpackung unterschiedlich groß dimensionierte Lager aufgenommen werden können. Dies wird dadurch ermöglicht, dass das Halteelement, das das Großwälzlager oder einen Lagerbestandteil, beispielsweise den Wälzlageraußenring, an mehreren voneinander beabstandeten Umfangsstellen umgreift, in seiner Position veränderbar ist. Das bedeutet, das Halteelement wird in Abhängigkeit von jeweiligen Umfang des Großwälzlagers an einer bestimmten Stelle mit dem Unterteil verbunden, so dass es an dessen Mantelfläche anliegt. Wird nun von der gleichen Verpackung ein größeres oder ein kleineres Großwälzlager aufgenommen, so wird das Halteelement entsprechend versetzt, so dass sein Abstand bezogen auf den Mittelpunkt der Verpackung vergrößert oder verkleinert ist und es stets an der Mantelfläche des jeweiligen Großwälzlagers anliegt. Auf dies Weise ist das Großwälzlager an verschiedenen Umfangsstellen umgriffen und in der Verpackung sicher fixiert. Das Fixieren des Großwälzlagers in der Verpackung ist von besonderer Bedeutung, da dieses wahlweise mit Straßenfahrzeugen. Schienenfahrzeugen, mit Schiffen oder in Flugzeugen transportiert wird und somit vielfältigen Bewegungen ausgesetzt ist.

Weitere vorteilhafte Ausgestaltungen der Erfindung sind in den Unteransprüchen beschrieben.

So ist nach Anspruch 2 vorgesehen, dass das Halteelement mit dem Unterteil durch Form- und/oder Kraftschluß verbunden ist. Vorteilhafter Weise wird man eine formschlüssige Verbindung allerdings bevorzugen, da auf diese Art und Weise eine besonders einfache Trennung von Halteelement und Unterteil möglich ist.

Eine besonders vorteilhafte Ausführungsvariante des Halteelements geht aus Anspruch 3 hervor. Danach ist vorgesehen, dass auf einer Oberseite einer kreisförmig ausgebildeten Grundplatte ein exzentrisch versetzt angeordneter Stift angeordnet ist, während eine Unterseite der Grundplatte mit einem zentrisch angeordneten zylindrisch Zapfen versehen ist. Die Grundplatte ist nun in verschiedenen Umfangsstellungen in das Unterteil einsteckbar, so dass der exzentrisch versetzt angeordnete Stift sich auf einer kreisförmigen Umlaufbahn bewegen kann und an jeder Stelle seiner Umlaufbahn arretierbar ist, so dass in Bezug auf einen Mittelpunkt der Verpackung immer ein unterschiedlicher Abstand einstellbar ist.

Als vorteilhaft hat es sich in diesem Zusammenhang erwiesen, wenn gemäß Anspruch 4 die kreisförmig ausgebildete Grundplatte an ihrer Mantelfläche mit einer Verzahnung versehen ist, die in einen zugehörigen, ebenfalls mit einer Verzahnung versehenen kreisförmigen Freiraum des Unterteils eingreift. Auf diese Weise ist durch eine entsprechende formschlüssige Verbindung sichergestellt, dass die Grundplatte an der Stelle arretiert ist, an der der exzentrisch versetzt angeordnete Stift die äußere Mantelfläche des Großwälzlagers umgreift.

Nach einem weiteren Merkmal der Erfindung gemäß Anspruch 5 ist vorgesehen, dass die Oberseite der kreisförmig ausgebildeten Grundplatte mit einer Skalierung versehen ist, die mit einer Markierung in der Seitenwand des ersten Freiraums in Übereinstimmung bringbar ist. Die Übereinstimmung von Skalierung und Markierung sorgt dafür, dass das Halteelement mit seinem exzentrisch versetzt angeordneten Stift genau an der Stelle positioniert werden kann, an der sich die Mantelfläche des jeweiligen Großwälzlagers erstreckt.

Als vorteilhaft hat es sich nach Anspruch 6 erwiesen, wenn der zylindrische Zapfen an seiner Stirnseite mit einem Formschlusselement versehen ist, das in ein zugehöriges Formschlusselement im Unterteil eingreift. Dadurch wird verhindert, dass das Halteelement im unbelasteten Zustand, d. h., ohne ein Großwälzlager, in der Verpackung lose herumliegt.

Nach einem weiteren zusätzlichen Merkmal gemäß Anspruch 7 ist vorgesehen, dass die Innenseite des Unter- und/oder des Oberteils mit senkrecht angeordneten Durchbrechungen versehen ist. Diese Durchbrechungen sorgen für eine erhöhte Stabilität von Ober- und Unterteil, die bei dem vorhanden Gewicht der Großwälzlager auch unbedingt gegeben sein muß. Die Art der senkrecht angeordneten Durchbrechungen ist dabei beliebig, d. h., im Vordergrund steht lediglich die Stabilität.

Nach Anspruch 8 ist vorgesehen, dass die Durchbrechungen durch parallel zueinander angeordnete Stege gebildet sind, welche in Längs- und in Querreihen zueinander angestellt sind. Eine andere Ausbildung der Durchbrechungen geht aus Anspruch 9 hervor. Danach sollen diese durch kreisförmig angeordnete, in radialer Richtung voneinander beabstandete Stege gebildet sein, wobei wenigstens an einer Umfangsstelle parallel zu einer Seitenkante verlaufende Stege angeordnet sind.

Nach einem zusätzlichen weiteren Merkmal der Erfindung gemäß Anspruch 10 soll das Ober- und/oder das Unterteil an seiner Innenseite mit einer zentrisch angeordneten Freistellung versehen sein. Diese Freistellung ist besonders für das Unterteil von maßgebender Bedeutung, da sie zur Entnahme des Großwälzlagers dient. Die erfolgt derart, dass mit einem Hebemittel das Großwälzlager ausgehend von der Freistellung untergriffen wird und somit heraushebbar ist.

Nach einem weiteren Merkmal der Erfindung gemäß Anspruch 11 ist vorgesehen, dass das Unterteil an seiner Außenseite mit hervorstehenden Stapelelementen versehen ist, die in zugehörige, auf der Oberseite des Oberteils angeordnete Ausnehmungen eingreifen. Wie der Name schon sagt, sorgen die Stapelelemente dafür, dass ein sicheres Stapeln von Verpackungen möglich ist. Entweder wird eine Verpackung genau über die andere Verpackung gestapelt oder es wird eine Verpackung auf Lücke über zwei Verpackungen gestapelt. Die Ausbildung der Stapelelemente ist dabei zweitrangig, d.h., diese können unterschiedliche Gestalt aufweisen.

Nach Anspruch 12 ist vorgesehen, dass diese zylinderförmig ausgebildet sind und in kreisrunde Ausnehmungen eingreifen. Aus Anspruch 13 geht hervor, dass diese rechteckig ausgebildet sind und einen kreissegmentartigen Vorsprung besitzen.

Nach einem weiteren zusätzlichen Merkmal der Erfindung gemäß Anspruch 14 sollen die Oberseite des Oberteils und die Unterseite des Unterteils mit Freistellungen zur Aufnahme eines Spannmittel versehen sein. Dieses Spannmittel sorgt dafür, dass sich das Oberteil nicht vom Unterteil der Verpackung lösen kann.

Aus Anspruch 15 geht hervor, dass die Verpackung aus einem gegen Schmierstoff und Korrosionsschutzmittel unempfindlichen Kunststoff hergestellt sein soll. Dies ist erforderlich, da das Verpackungsmaterial auch bei sehr langen Transportzeiten oder bei sehr langen Lagerzeiten keinen Schaden durch die genannten Stoffe nehmen darf, um wieder verwendungsfähig zu sein.

Auch ist nach dem Anspruch 16 vorgesehen, dass wenigstens das Oberteil der Verpackung aus einem durchsichtigen Kunststoff hergestellt ist. Dies ist von Vorteil, da eine visuelle Kontrolle des Inhaltes der Verpackung ohne Demontage jederzeit unkompliziert möglich ist.

Wie Anspruch 17 erkennen lässt, sollen sich die Seitenwände vom Unterteil und vom Oberteil in ihrer Höhenausdehnung überdecken. Der Vorteil dieser Ausführungsvariante liegt darin, dass in der Verpackung nicht nur Großwälzlager unterschiedlichen Durchmessers, sondern auch unterschiedlicher axialer Breite unterbringbar sind. Je breiter die Wälzlager in axialer Richtung sind, um so geringer wird die Überdeckung der Seitenwände von Unterteil und Oberteil ausfallen, da das Oberteil vom Lager praktisch angehoben wird. Oder anders ausgedrückt, der Abstand der Grundplatte des Unterteils von der Grundplatte des Oberteils wird von der axialen Breite des Ladegutes bestimmt.

Die Erfindung wird an nachstehenden Ausführungsbeispielen näher erläutert.

### Kurze Beschreibung der Zeichnungen

Es zeigen:
- Figur 1: zwei übereinander gestapelte Verpackungen,
- Figuren 2,3: je eine Draufsicht von oben und von unten auf eine Verpackung,
- Figuren 4,5: je eine Draufsicht auf ein Oberteil von innen,
- Figur 6: eine Draufsicht auf ein Oberteil von oben,
- Figur 7: eine Draufsicht auf ein Unterteil von unten,
- Figuren 8,9: je eine Draufsicht auf ein Unterteil mit eingelegtem Halteelement und mit eingelegtem Halteelement und Lager,
- Figur 10: eine perspektivische Darstellung eines Halteelementes,
- Figur 10a: eine Draufsicht auf ein im Unterteil angeordnetes Halteelement,
- Figur 11: eine Draufsicht auf ein Halteelement,
- Figur 12: einen Schnitt entlang der Linie XII - XII in Figur 11 und
- Figur 13: eine Seitenansicht eines Halteelements.

### Ausführliche Beschreibung der Zeichnungen

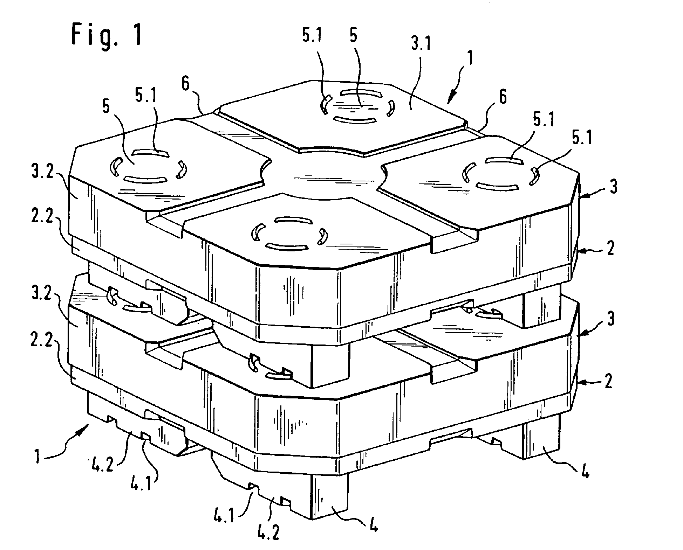

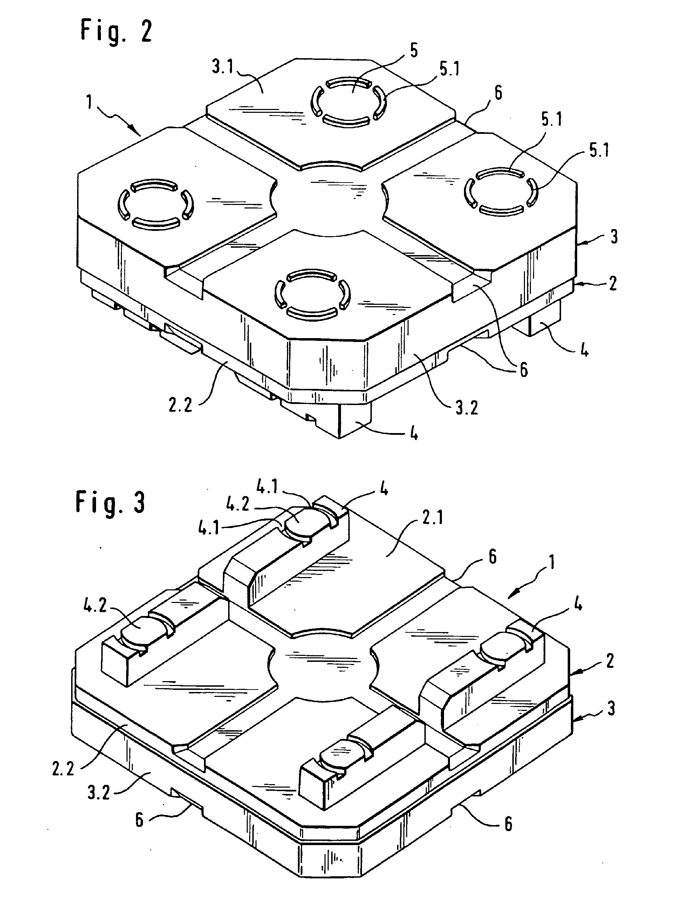

Die in den Figuren 1, 2 und 3 dargestellte Verpackung 1 besteht aus dem Unterteil 2 und dem Oberteil 3, die zwischen sich einen nicht sichtbaren Raum zur Aufnahme eines Großwälzlagers begrenzen. Sowohl das Unterteil 2 als auch das Oberteil 3 bestehen aus einer Grundplatte 2.1, 3.1 von der sich rechtwinklig angeordnete Seitenwände 2.2, 3.2 nach oben und nach unten erstrecken, die so aufeinander abgestimmt sind, dass Unterteil 2 und Oberteil 3 ineinander stülpbar sind, ähnlich dem Prinzip einer Tortenschachtel. Das Unterteil 2 ist mit Stapelelementen 4 versehen, die in etwa rechteckig ausgebildet sind und je zwei bogenförmige Ausnehmungen 4.1 aufweisen, so daß ein im Wesentlichen kreissegmentartiger Vorsprung 4.2 gebildet ist. Auf dem Oberteil 3 sind zugehörige Ausnehmungen 5 gebildet, welche von vier bogenförmigen Wülsten 5.1 begrenzt sind. Stapelelement 4 und zugehörige Ausnehmung 5 müssen nun so aufeinander abgestimmt sein, dass ein Verrutschen der gemäß Figur 1 übereinander angeordneten Verpackungen 1 verhindert ist. Dies erfolgt derart, dass die Wulst 5.1 des Oberteils 3 in die bogenförmige Ausnehmung 4.1 des Stapelelements 4 des Unterteils 2 eingreift. Wie aus den genannten Figuren weiter ersichtlich, sind sowohl die Oberseite des Oberteils 3 als auch die Unterseite des Unterteils 2 mit Freistellungen 6 versehen, die sich im vorliegenden Fall im Mittelpunkt kreuzen. Diese dienen zur Aufnahme eines Spannmittels, beispielsweise eines Riemens, und sorgen dafür, dass sich das Oberteil 3 nicht vom Unterteil 2 der Verpackung 1 lösen kann.

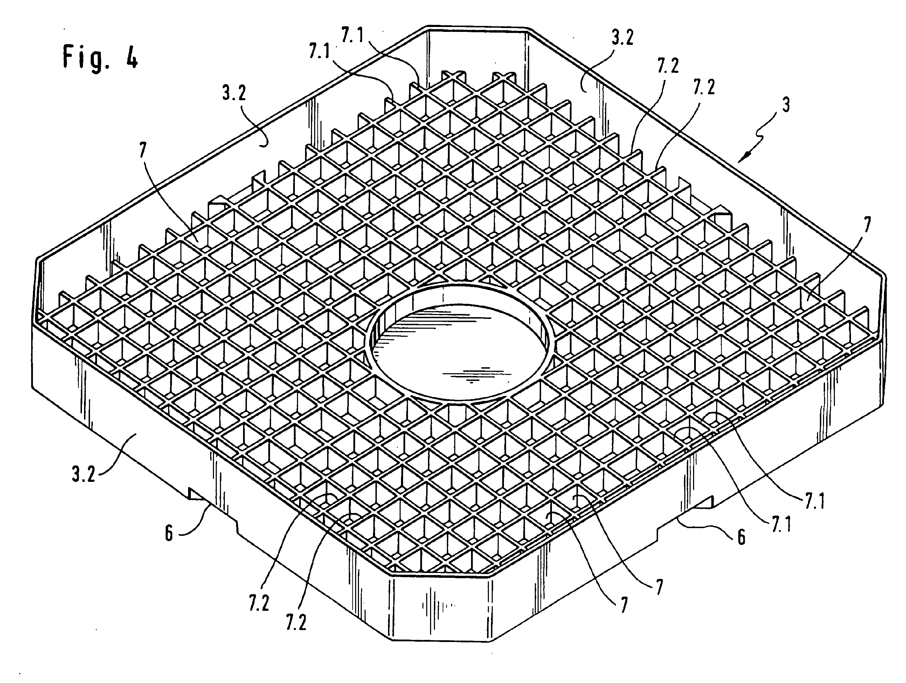

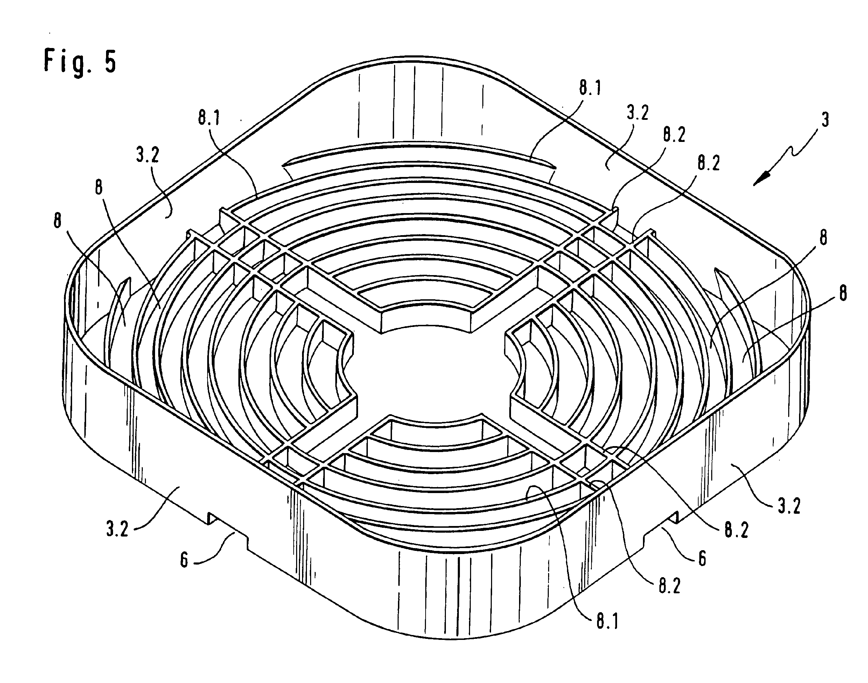

In den Figuren 4 und 5 sind Innenseiten von Oberteilen 3 einer Verpackung 1 gezeigt, welche mit Durchbrechungen 7, 8 ausgestattet sind. Diese werden im ersten Fall durch parallel zueinander angeordnete Stege 7.1, 7.2 gebildet, die in Längs- und in Querreihen zueinander angestellt sind. Die Stege 7.1, 7.2 sind dabei mit der Grundplatte 3.1 des Oberteils 3 verbunden, so dass die waffelartig angeordneten Durchbrechungen 7 gebildet sind. Im zweiten Fall sind die Durchbrechungen 8 durch kreisförmig angeordnete, in radialer Richtung von einander beabstandete Stege 8.1 gebildet, welche an mehreren Umfangsstellen mit parallel zu den Seitenwänden 3.2 verlaufenden Stegen 8.2 verbunden sind. Die Art und Lage der Stege 7.1, 7.2, 8.1, 8.2 ist letztendlich unerheblich, es kommt lediglich darauf an, dass eine hohe Stabilität des Teils erreicht wird. Die Figuren 4 und 5 zeigen weiter, dass in beiden Fällen im Oberteil 3 eine kreisförmig ausgebildete Freistellung 9 vorhanden ist.

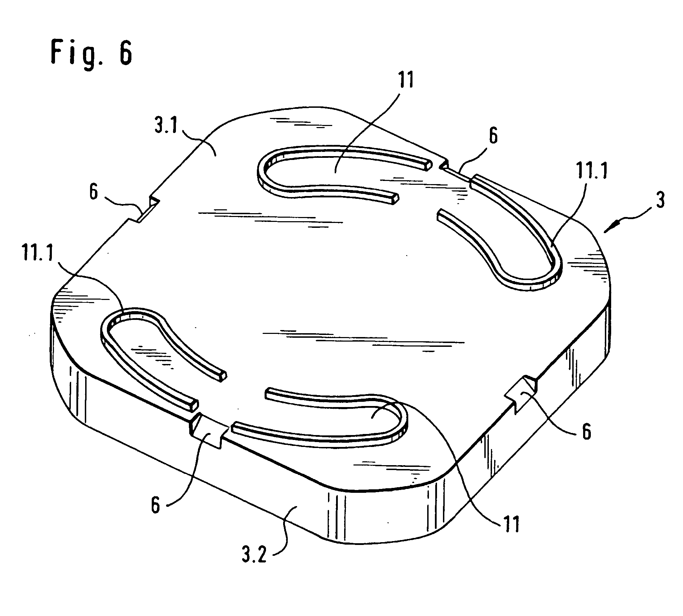

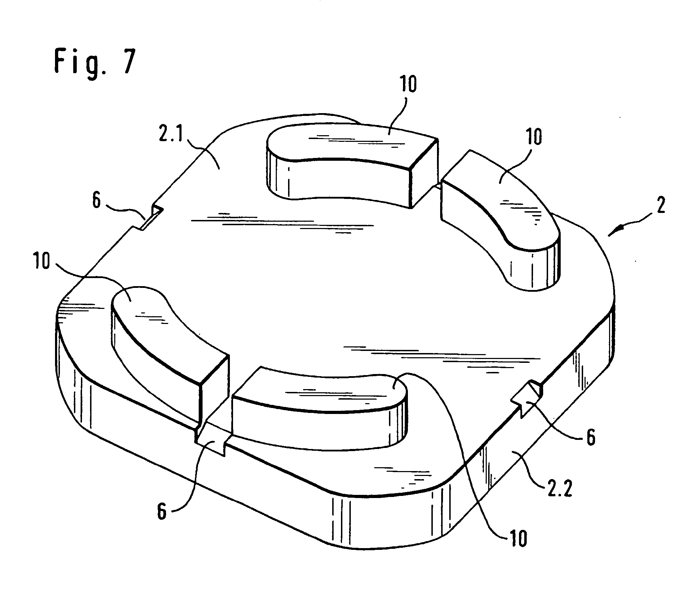

In den Figuren 7 und 6 sind andersartig ausgebildete Stapelelemente gezeigt, die aus den bogenförmigen Segmenten 10 bestehen, welche in zugehörige Ausnehmungen 11 eingreifen. Die Ausnehmung 11 wird dabei von Wülsten 11.1 begrenzt, die die bogenförmigen Segmente 10 umschließen und somit am Verrutschen hindern.

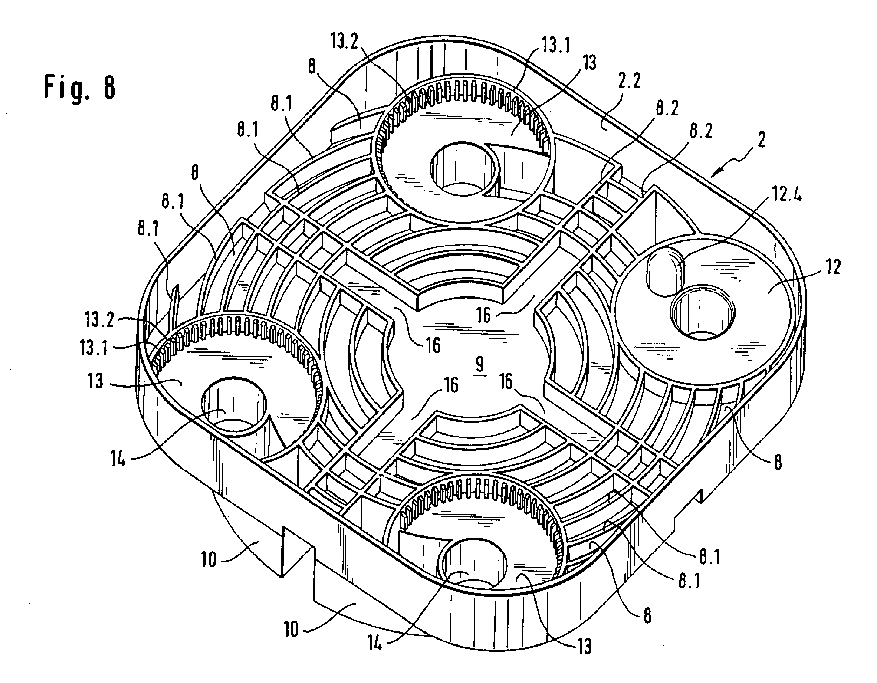

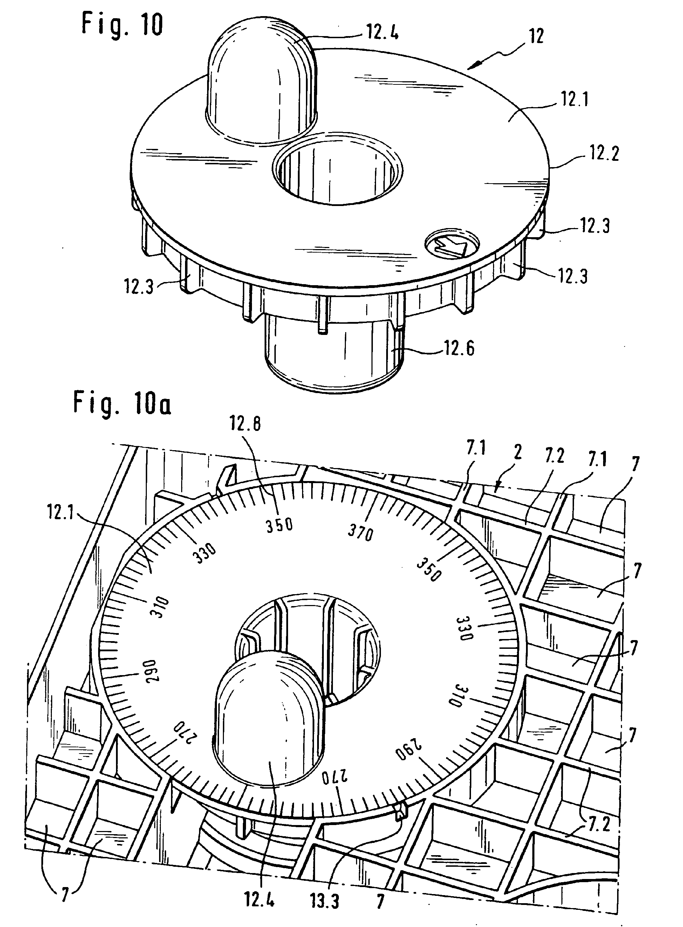

Die eigentliche Erfindung, nach der es darauf ankommt, die gleiche Verpackung für in der Größe unterschiedlich dimensionierte Großwälzlager verwendungsfähig zu machen, geht aus den Figuren 8 bis 13 hervor, wobei zunächst das in den Figuren 10, 10a, 11, 12 und 13 dargestellte Halteelement näher beschrieben wird.

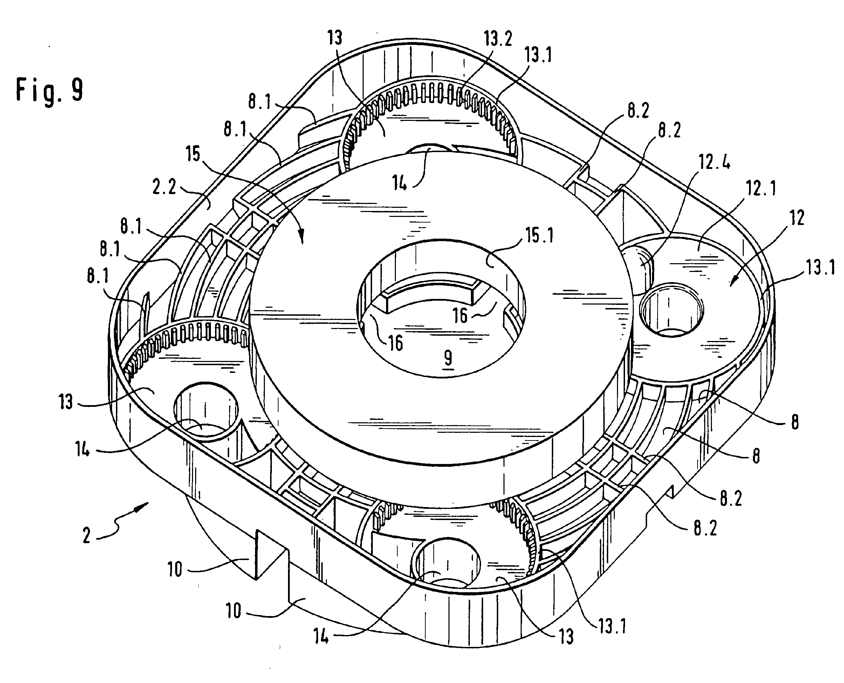

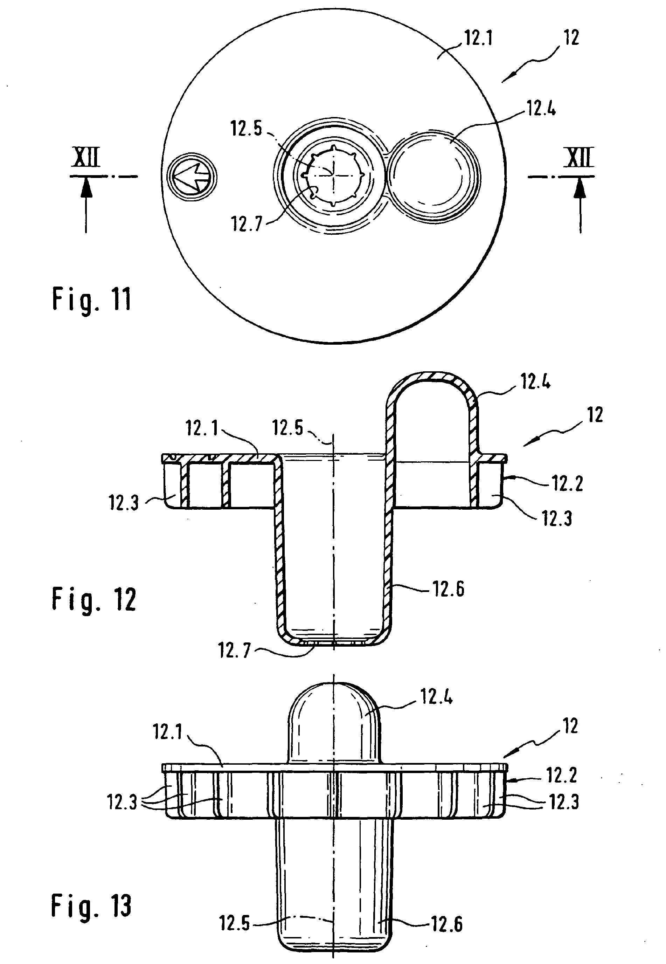

Das mit 12 bezeichnete Halteelement ist als Spritzgussteil in einfacher Weise einteilig herstellbar und besteht aus der kreisförmig ausgebildeten Grundplatte 12.1, deren Mantelfläche 12.2 mit einer Verzahnung 12.3 versehen ist. Auf der Oberseite der Grundplatte 12.1 ist der Stift 12.4 angeordnet, der exzentrisch versetzt zur Drehachse 12.5 des Halteelements 12 positioniert ist. Die Unterseite der Grundplatte 12.1 ist mit dem zentrisch angeordneten zylindrischen Zapfen 12.6 versehen, der sich in entgegengesetzter axialer Richtung als der Stift 12.4 erstreckt. Wie die Figuren 12 und 13 zeigen, kann dieser Zapfen 12.6 an seiner unteren Stirnseite mit dem Formschlusselement 12.7 versehen oder leicht konisch ausgebildet sein. Auf diese Weise ist verhindert, dass das Halteelement 12 aus dem Unterteil 2 bei nicht eingelegtem Großwälzlager 15 herausfallen kann. Bei Drehung des Halteelementes 12 um seine Achse 12.5 bewegt sich der exzentrisch versetzt angeordnete Stift 12.4 auf einer Kreisbahn, so dass unterschiedliche Abstände des Stiftes 12.4 von einem Zentrum der Verpackung 1 einstellbar sind, wie die Figuren 8 und 9 zeigen.

Wie aus Figur 10a erkennbar, ist es vorteilhaft, wenn die Oberseite der Grundplatte 12.1 des Halteelements 12 mit einer umlaufenden Skalierung 12.8 versehen ist. Die angegebenen Zahlenwerte im Bereich von 270 - 370 entsprechen dem Durchmesser der Großwälzlager in mm. Wird ein entsprechender Wert mit der Markierung 13.3 der Seitenwand 13.1 in Übereinstimmung gebracht, so steht der exzentrisch versetzte Stift 12.4 des Halteelements 12 genau in richtiger Position zur Anlage an der äußeren Mantelfläche des betreffenden Großwälzlagers.

Das in den Figuren 8 und 9 gezeigte Unterteil 2 der Verpackung 1 ist in der bereits unter Figur 5 beschriebenen Weise mit Durchbrechungen 8 zur Erhöhung seiner mechanischen Stabilität versehen. Dazu ist die Grundplatte 2.1 mit ein radialer Richtung von einander beabstandeten, kreisförmigen Stegen 8.1 versehen, die an vier gleichmäßig voneinander beabstandeten Umfangsstellen mit parallel zu den Seitenwänden 2.2 verlaufenden Stegen 8.2 verbunden sind, wobei mittig die kreisförmige Freistellung 9 gebildet ist. Die kreisförmig verlaufenden Stege 8.1 sind in jeden Eckbereich von einem ersten kreisrunden Freiraum 13 unterbrochen, der durch die um 360° umlaufende Seitenwand 13.1 begrenzt ist. Während die Seitenwand 13.1 mit der Verzahnung 13.2 versehen ist, ist der erste Freiraum 13 durch einen zweiten Freiraum 14 fortgesetzt, der im Durchmesser kleiner als der Freiraum 13 ist.

Wie insbesondere Figur 9 zeigt, wird das mit 15 bezeichnete und schematisch dargestellte Großwälzlager auf die Innenseite des Unterteils 2 so abgelegt, dass seine mit 15.1 bezeichnete Innenbohrung in etwa mit der Freistellung 9 übereinstimmt. Davor wurden die mit 12 bezeichneten Halteelemente so eingeführt, dass deren exzentrisch zur Drehachse 12.5 versetzt angeordneten Stifte 12.4 an der Mantelfläche des Großwälzlagers 15 zur Anlage gelangen. Auf diese Weise ist das Großwälzlager 15 an vier Umfangsstellen durch die Stifte 12.4 umgriffen, so dass es nicht verrutschen kann, wobei das Großwälzlager 15 auf einem Teil der Grundplatte 12.1 des Halteelements 12 aufliegt. Während das Halteelement 12 mit seinem Zapfen 12.6 im zweiten Freiraum 14 geführt ist, ist dessen Grundplatte 12.1 im ersten Freiraum 13 untergebracht. Dabei greift die radial nach außen gerichtete Verzahnung 12.3 des Halteelementes 12 in die radial nach innen gerichtete Verzahnung 13.2 der Seitenwand 13.1 ein, so dass das Halteelement 12 im ersten Freiraum 13 formschlüssig festgelegt ist. Wird nun das Großwälzlager 15 durch ein im Durchmesser gröβeres ersetzt, so wird zunächst das erste herausgehoben, indem mit einem Hebezeug in die Spalten 16 eingefahren wird, welche durch die geradlinig ausgebildeten Stege 8.2 begrenzt sind. Danach werden die Halteelemente 12 zunächst aus den beiden Freiräumen 13, 14 entfernt, um anschließend wieder so eingesetzt zu werden, dass deren Stifte 12.4 an der im Durchmesser vergrößerten Mantelfläche des Großwälzlagers 15 zur Anlage gelangen.

Figur 9 läßt weiter erkennen, dass in der Verpackung 1 auch Großwälzlager 15 mit einer unterschiedlichen axialen Breite unterbringbar sind, weil sich die Seitenwände 2.2 von Unterteil 2 mit den Seitenwänden 3.2 des Oberteils 3 (nicht dargestellt) in ihrer Höhenausdehnung überdecken. Ohne eingesetztes Großwälzlager 15 ist die Überdeckung der Seitenwände 2.2, 3.2 am größten und sie nimmt mit zunehmender axialer Breite des Großwälzlagers 15 ab. Anders ausgedrückt, der Abstand der Grundplatte 2.1 des Unterteils 2 von der Grundplatte 3.1 des Oberteils 3 wird von der axialen Breite des Großwälzlagers 15 bestimmt.

An dieser Stelle sei abschließend darauf hingewiesen, dass an den vorstehend beschriebenen Ausführungsbeispielen zwar die Verpackung nur eines Großwälzlagers beschrieben ist, die Erfindung sich aber auch auf Mehrstückverpackungen erstrecken soll. Dies bedeutet, dass in einer Verpackungseinheit mehrere Großwälzlager untergebracht sein können, die dann in der beschriebenen Weise aufgenommen sind.

### Bezugszahlenliste

- 1: Verpackung
- 2: Unterteil
- 2.1: Grundplatte
- 2.2: Seitenwand
- 3: Oberteil
- 3.1: Grundpaltte
- 3.2: Seitenwand
- 4: Stapelelement
- 4.1: bogenförmige
Ausnehmung
- 4.2: Vorsprung
- 5: Ausnehmung
- 5.1: Wulst
- 6: Freistellung
- 7: Durchbrechung
- 7.1: Steg
- 7.2: Steg
- 8: Durchbrechung
- 8.1: Steg
- 8.2: Steg
- 9: Freistellung
- 10: Stapelelement
- 11: Ausnehmung
- 11.1: Wulst
- 12: Halteelement
- 12.1: Grundplatte
- 12.2: Mantelfläche
- 12.3: Verzahnung
- 12.4: Stift
- 12.5: Drehachse
- 12.6: Zapfen

- 12.7: Formschlußelement
- 12.8: Skalierung
- 13: erster Freiraum
- 13.1: Seitenwand
- 13.2: Verzahnung
- 13.3: Markierung
- 14: zweiter Freiraum
- 15: Großwälzlager
- 15.1: Innenbohrung
- 16: Spalt

## Patentansprüche

1. Verpackung (1) für den Versand und die Handhabung von Großwälzlagern (15), bestehend aus einem Unterteil (2) und einem Oberteil (3), die ineinander stülpbar sind und zwischen sich einen Raum zur Aufnahme wenigstens eines Großwälzlagers (15) begrenzen, **dadurch gekennzeichnet, dass** eine äußere Mantelfläche des Großwälzlagers (15) an mehreren voneinander beabstandeten Umfangsstellen von einem feststellbaren Halteelement umgriffen ist, wobei das mit dem Unterteil (2) lösbar verbundene Halteelement in seiner Stellung derart veränderbar ist, dass sein Abstand bezogen auf einen Mittelpunkt der Verpackung (1) vergrößer- oder verkleinerbar ist.

2. Verpackung (1) nach Anspruch 1, **dadurch gekennzeichnet, dass** das Halteelement mit dem Unterteil (2) durch Form- und/oder Kraftschluß verbunden ist.

3. Verpackung (1) nach Anspruch 1, **dadurch gekennzeichnet, dass** an dem Halteelement (12) auf einer Oberseite einer kreisförmig ausgebildeten Grundplatte (12.1) ein exzentrisch versetzt angeordneter Stift (12.4) angeordnet ist, während eine Unterseite der Grundplatte (12.1) mit einem zentrisch angeordneten zylindrischen Zapfen (12.6) versehen ist.

4. Verpackung (1) nach Anspruch 3, **dadurch gekennzeichnet, dass** die kreisförmig ausgebildete Grundplatte (12.1) des Halteelements (12) an ihrer Mantelfläche (12.2) mit einer Verzahnung (12.3) versehen ist, die in einen zugehörigen, ebenfalls mit einer Verzahnung (13.2) versehenen kreisförmigen Freiraum (13) des Unterteils (2) eingreift.

5. Verpackung (1 ) nach Anspruch 3, **dadurch gekennzeichnet, dass** die Oberseite der kreisförmig ausgebildeten Grundplatte (12,1) des Halteelements (12) mit einer Skalierung (12.8) versehen ist, die mit einer Markierung (13.3) in der Seitenwand (13.1) des ersten Freiraums (13) in Übereinstimmung brinbar ist.

6. Verpackung (1) nach Anspruch 3, **dadurch gekennzeichnet, dass** der zylindrische Zapfen (12.6) des Halteelements (12) an seiner Stirnseite mit einem Form-schlußelement (12.7) versehen ist, das in ein zugehöriges Formschluß-element im Unterteil (2) eingreift.

7. Verpackung (1) nach Anspruch 1, **dadurch gekennzeichnet, dass** die Innenseite des Unter- (2) und/oder des Oberteils (3) mit senkrecht angeordneten Durchbrechungen (7,8) versehen ist.

8. Verpackung (1) nach Anspruch 7, **dadurch gekennzeichnet, dass** die Durchbrechungen (7) durch parallel zueinander angeordnete Stege (7.1,7.2) gebildet sind, welche in Längs- und Querreihen zueinander angeordnet sind.

9. Verpackung (1) nach Anspruch 7, **dadurch gekennzeichnet, dass** die Durchbrechungen (8) durch kreisförmig angeordnete, in radialer Richtung voneinander beabstandete Stege (8.1) gebildet sind, wobei wenigstens an einer Umfangsstelle parallel zu einer Seitenkante verlaufende Stege (8.2) angeordnet sind.

10. Verpackung (1) nach Anspruch 1, **dadurch gekennzeichnet, dass** das Ober- (3) und/oder Unterteil (2) an seiner Innenseite mit einer zentrisch angeordneten Freistellung (9) versehen ist.

11. Verpackung (1) nach Anspruch 1, **dadurch gekennzeichnet, dass** das Unterteil (2) an seiner Außenseite mit hervorstehenden Stapelelementen (4,10) versehen ist, die in zugehörige, auf der Oberseite des Oberteils (3) angeordnete Ausnehmungen (5,11) eingreifen.

12. Verpackung (1) nach Anspruch 10, **dadurch gekennzeichnet, dass** die Stapelelemente zylinderförmig ausgebildet sind und in kreisrunde Ausnehmungen eingreifen.

13. Verpackung (1) nach Anspruch 10, **dadurch gekennzeichnet, dass** die Stapelelemente (4) rechteckförmig ausgebildet sind und einen kreissegmentartigen Vorsprung (4.2) aufweisen.

14. Verpackung (1) nach Anspruch 1, **dadurch gekennzeichnet, dass** die Oberseite des Oberteils (3) und die Unterseite des Unterteils (2) mit Freistellungen (6) zur Aufnahme eines Spannmittels versehen sind.

15. Verpackung (1) nach Anspruch 1, **dadurch gekennzeichnet, dass** sie aus einem gegen Schmierstoff und Korrosionsschutzmittel unempfindlichen Kunststoff hergestellt ist.

16. Verpackung (1) nach Anspruch 15, **dadurch gekennzeichnet, dass** wenigstens das Oberteil (3) aus einem durchsichtigen Kunststoff hergestellt ist.

17. Verpackung (1) nach Anspruch 1, **dadurch gekennzeichnet, dass** sich die Seitenwände (2.2, 3.2) vom Unterteil (2) und vom Oberteil (3) in ihrer Höhenausdehnung überdecken.

## Claims

1. Packaging (1) for the shipment and handling of large anti-friction bearings (15), consisting of a bottom part (2) and a top part (3) which can be put one inside the other and define between them a space for accommodating at least one large anti-friction bearing (15),
**characterized in that** an outer lateral surface of the large anti-friction bearing (15) is gripped at a plurality of spaced-apart circumferential points by a fixable retaining element, the retaining element, detachably connected to the bottom part (2), being varied in its position in such a way that its distance from the centre point of the packaging (1) can be increased or reduced.

2. Packaging (1) according to Claim 1, **characterized in that** the retaining element is connected to the bottom part (2) in a positive-locking and/or frictional manner.

3. Packaging (1) according to Claim 1, **characterized in that** a pin (12.4) arranged in an eccentrically offset manner is arranged on the retaining element (12) on a top side of a circular base plate (12.1), whereas an underside of the base plate (12.1) is provided with a centrally arranged cylindrical journal (12.6).

4. Packaging (1) according to Claim 3, **characterized in that** the circular base plate (12.1) of the retaining element (12) is provided with a tooth system (12.3) on its lateral surface (12.2), said tooth system (12.3) engaging in an associated circular clear space (13), likewise provided with a tooth system (13.2), of the bottom part (2).

5. Packaging (1) according to Claim 3, **characterized in that** the top side of the circular base plate (12) of the retaining element (12) is provided with a scale (12.8) which can be brought into line with a marking (13.3) in the side wall (13.1) of the first clear space (13).

6. Packaging (1) according to Claim 3, **characterized in that** the cylindrical journal (12.6) of the retaining element (12) is provided at its end face with a positive-locking element (12.7) which engages in a corresponding positive-locking element in the bottom part (2).

7. Packaging (1) according to Claim 1, **characterized in that** the inside of the bottom part (2) and/or of the top part (3) is provided with perpendicularly arranged apertures (7, 8).

8. Packaging (1) according to Claim 7, **characterized in that** the apertures (7) are formed by webs (7.1, 7.2) which are arranged parallel to one another and in longitudinal and transverse rows relative to one another.

9. Packaging (1) according to Claim 7, **characterized in that** the apertures (8) are formed by webs (8.1) which are arranged in a circle and are spaced apart in the radial direction, wherein webs (8.2) running parallel to a side edge are arranged at least at one circumferential point.

10. Packaging (1) according to Claim 1, **characterized in that** the top part (3) and/or the bottom part (2) is provided on its inside with a centrally arranged clearance portion (9).

11. Packaging (1) according to Claim 1, **characterized in that** the bottom part (2) is provided with projecting stacking elements (4, 10) on its outside, said stacking elements (4, 10) engaging in associated recesses (5, 11) arranged on the top side of the top part (3).

12. Packaging (1) according to Claim 10, **characterized in that** the stacking elements are of cylindrical design and engage in circular recesses.

13. Packaging (1) according to Claim 10, **characterized in that** the stacking elements (4) are of rectangular design and have a projection (4.2) like a circle segment.

14. Packaging (1) according to Claim 1, **characterized in that** the top side of the top part (3) and the underside of the bottom part (2) are provided with clearance portions (6) for accommodating a clamping means.

15. Packaging (1) according to Claim 1, **characterized in that** it is made of a plastic which is insensitive to lubricant and anti-corrosion agent.

16. Packaging (1) according to Claim 15, **characterized in that** at least the top part (3) is made of a transparent plastic.

17. Packaging (1) according to Claim 1, **characterized in that** the side walls (2.2, 3.2) of the bottom part (2) and of the top part (3) overlap in their vertical extent.

## Revendications

1. Conditionnement (1) pour le transport et la manipulation de grands paliers à roulement (15), constitué d'une partie inférieure (2) et d'une partie supérieure (3), qui peuvent être emboîtées l'une dans l'autre et qui délimitent entre elles un espace pour recevoir au moins un grand palier à roulement (15), **caractérisé en ce qu'**une surface d'enveloppe extérieure du grand palier à roulement (15) est saisie en plusieurs endroits de sa circonférence espacés les uns des autres par un élément de retenue pouvant être fixé, l'élément de retenue connecté de manière amovible à la partie inférieure (2) pouvant être changé de place de telle sorte que sa distance par rapport à un centre du conditionnement (1) soit réduite ou augmentée.

2. Conditionnement (1) selon la revendication 1,
**caractérisé en ce que** l'élément de retenue est connecté à la partie inférieure (2) par engagement par coopération géométrique et/ou par force.

3. Conditionnement (1) selon la revendication 1,
**caractérisé en ce qu'**une broche (12.4) décalée de manière excentrique est disposée sur l'élément de retenue (12) sur un côté supérieur d'une plaque de base (12.1) réalisée sous forme circulaire, tandis qu'un côté inférieur de la plaque de base (12.1) est pourvu d'un tourillon cylindrique (12.6) disposé centralement.

4. Conditionnement (1) selon la revendication 3,
**caractérisé en ce que** la plaque de base (12.1) réalisée sous forme circulaire de l'élément de retenue (12) est pourvue sur sa surface d'enveloppe (12.2) d'une denture (12.3) qui vient en prise dans une cavité (13) de forme circulaire associée de la partie inférieure (2), également pourvue d'une denture (13.2).

5. Conditionnement (1) selon la revendication 3,
**caractérisé en ce que** le côté supérieur de la plaque de base (12.1) réalisée sous forme circulaire de l'élément de retenue (12) est pourvu d'une échelle (12.8) qui peut être amenée en coïncidence avec un marquage (13.3) dans la paroi latérale (13.1) de la première cavité (13).

6. Conditionnement (1) selon la revendication 3,
**caractérisé en ce que** le tourillon cylindrique (12.6) de l'élément de retenue (12) est pourvu sur son côté frontal d'un élément d'engagement par coopération géométrique (12.7) qui vient en prise dans un élément d'engagement par coopération géométrique associé dans la partie inférieure (2).

7. Conditionnement (1) selon la revendication 1,
**caractérisé en ce que** le côté intérieur de la partie inférieure (2) et/ou supérieure (3) est pourvu de percées (7, 8) disposées perpendiculairement.

8. Conditionnement (1) selon la revendication 7,
**caractérisé en ce que** les percées (7) sont formées par des nervures (7.1, 7.2) disposées parallèlement les unes aux autres, qui sont disposées en rangées longitudinales et transversales les unes par rapport aux autres.

9. Conditionnement (1) selon la revendication 7,
**caractérisé en ce que** les percées (8) sont formées par des nervures (8.1) disposées en cercles et espacées les unes des autres dans la direction radiale, des nervures (8.2) s'étendant parallèlement à une arête latérale étant prévues au moins en un endroit périphérique.

10. Conditionnement (1) selon la revendication 1,
**caractérisé en ce que** la partie supérieure (3) et/ou inférieure (2) est pourvue sur son côté intérieur d'une ouverture (9) disposée centralement.

11. Conditionnement (1) selon la revendication 1,
**caractérisé en ce que** la partie inférieure (2) est pourvue sur son côté extérieur d'éléments d'empilage saillants (4, 10), qui viennent en prise dans des évidements associés (5, 11) disposés sur le côté supérieur de la partie supérieure (3).

12. Conditionnement (1) selon la revendication 10,
**caractérisé en ce que** les éléments d'empilage sont réalisés sous forme cylindrique et viennent en prise dans des évidements ronds circulaires.

13. Conditionnement (1) selon la revendication 10,
**caractérisé en ce que** les éléments d'empilage (4) sont réalisés sous forme rectangulaire et présentent une saillie (4.2) en forme de segment de cercle.

14. Conditionnement (1) selon la revendication 1,
**caractérisé en ce que** le côté supérieur de la partie supérieure (3) et le côté inférieur de la partie inférieure (2) sont pourvus d'ouvertures (6) pour recevoir un moyen de serrage.

15. Conditionnement (1) selon la revendication 1,
**caractérisé en ce qu'**il est fabriqué en un plastique insensible aux lubrifiants et aux agents de protection contre la corrosion.

16. Conditionnement (1) selon la revendication 15,
**caractérisé en ce qu'**au moins la partie supérieure (3) est fabriquée en un plastique transparent.

17. Conditionnement (1) selon la revendication 1,
**caractérisé en ce que** les parois latérales (2.2, 3.2) de la partie inférieure (2) et de la partie supérieure (3) se recouvrent dans leur dimension en hauteur.
